(19) Europäisches Patentamt
European Patent Office
Office européen des brevets

(11) **EP 1 741 066 B1**

(12) **FASCICULE DE BREVET EUROPEEN**

(45) Date de publication et mention
de la délivrance du brevet:
**03.06.2020 Bulletin 2020/23**

(21) Numéro de dépôt: **05736605.6**

(22) Date de dépôt: **13.04.2005**

(51) Int Cl.:
**G06T 17/00** *(2006.01)*     **G06T 11/00** *(2006.01)*
**G06T 5/00** *(2006.01)*

(86) Numéro de dépôt international:
**PCT/EP2005/003872**

(87) Numéro de publication internationale:
**WO 2005/114588 (01.12.2005 Gazette 2005/48)**

(54) **METHODE ET DISPOSITIF POUR GENERER UNE CARTE PROCEDURALE A PARTIR D'UN PARAMETRE EXTERNE TEL UNE CARACTERISTIQUE D'UNE IMAGE**

VERFAHREN UND VORRICHTUNG ZUR ERZEUGUNG EINES VERFAHRENSDIAGRAMMS DURCH EINEN ÄUSSEREN PARAMETER WIE EIN BILDMERKMAL

METHOD AND DEVICE FOR GENERATING A PROCEDURAL MAP FROM AN EXTERNAL PARAMETER SUCH AS AN IMAGE CHARACTERISTIC

(84) Etats contractants désignés:
**AT BE BG CH CY CZ DE DK EE ES FI FR GB GR HU IE IS IT LI LT LU MC NL PL PT RO SE SI SK TR**

(30) Priorité: **19.04.2004 FR 0404238**

(43) Date de publication de la demande:
**10.01.2007 Bulletin 2007/02**

(73) Titulaire: **ADOBE INC.**
**San Jose, CA 95110-2704 (US)**

(72) Inventeur: **DEGUY, Sébastien**
**63000 Clermont-Ferrand (FR)**

(74) Mandataire: **Müller-Boré & Partner**
**Patentanwälte PartG mbB**
**Friedenheimer Brücke 21**
**80639 München (DE)**

(56) Documents cités:
**US-A- 5 060 169     US-A- 5 680 475**

- **DEGUY S ET AL: "A FLEXIBLE NOISE MODEL FOR DESIGNING MAPS" INTERNATIONAL WORKSHOP ON VISION, MODELING AND VISUALIZATION. PROCEEDINGS, XX, XX, 21 novembre 2001 (2001-11-21), pages 299-307, XP008033245**
- **DEGUY S ET AL: "CLASSIFICATION OF TEXTURE IMAGES USING MULTI-SCALE STATISTICAL ESTIMATORS OF FRACTAL PARAMETERS" PROCEEDINGS OF THE BRITISH MACHINE VISION CONFERENCE, XX, XX, vol. 1, 14 septembre 2000 (2000-09-14), pages 192-201, XP008033243**

**Description**

La présente invention concerne une méthode ainsi que les outils permettant de créer et /ou modifier des cartes procédurales, notamment pour le traitement d'images à partir d'un paramètre externe tel une caractéristique d'une image de base

De nombreux outils de traitement d'images sont aujourd'hui connus. Cependant, les outils de type connus permettent de réaliser des effets visuels de façon globale, en général sur l'ensemble d'une image, de façon homogène. Ainsi, l'effet est produit suivant une intensité uniforme sur toute la partie traitée.

Cette situation est souvent imparfaite, en particulier lorsque l'on souhaite réaliser des effets complexes, plus réalistes, etc. Dans de tels cas, les utilisateurs ont accès à des bibliothèques de cartes d'effets visuels, permettant de réaliser les effets courants. Dans ce cas, il n'est pas possible de contrôler localement le traitement, ni procéder à des retouches, puisque tout est commandé par les cartes sélectionnées.

Autrement, il faut procéder manuellement, ce qui est souvent long et fastidieux.

Le document « A flexible noise model for designing maps » international workshop on vision, modeling and visualization proceedings, 21/11/2001, pages 299-307 décrit un modèle mathématique et théorique permettant de générer ou modifier des cartes procédurales.

Pour pallier ces différents inconvénients, la présente invention prévoit une interface de travail selon la revendication 1.

Selon ladite méthode, une nouvelle carte peut être générée soit à partir d'une carte déjà existante, soit sans carte de départ. L'utilisateur a donc une souplesse totale. Le fait de pouvoir récupérer et utiliser un ou plusieurs paramètres externes pour configurer une carte est particulièrement avantageux. Ainsi par exemple, dans le cas où on utilise l'intensité d'une couleur d'une image numérique, la carte ainsi créée peut être directement influencée par la composition, la forme ou la structure de cette image. Si on choisit par exemple une couleur fortement présente sur une image, le contour ou forme de base de la carte peut évoquer, suggérer plus ou moins fortement le contenu de l'image de base. Cet aspect donne donc à l'utilisateur des possibilités de travail quasi-infinies.

Par ailleurs, la structure en arbre de la carte permet de retoucher ou modifier localement la carte.

La possibilité d'effectuer des modifications locales, c'est-à-dire au niveau de seulement un seul ou plusieurs nœuds, est due au fait que la carte est agencée ou structurée en arbre. Une telle structure permet d'agir localement, par exemple au niveau d'un nœud ou d'une branche ou de portions de branches, sans affecter pour autant le reste des nœuds ou branches. De manière avantageuse, il est également possible de choisir que les modifications soient récursives ou pas. La méthode et les outils selon l'invention permettent de préférence d'agir soit localement ou sur une carte entière. Un sélecteur « mode local ou global » permet avantageusement de choisir le mode d'opération souhaité.

De manière préférentielle, le procédé comprenant également les étapes consistant à :

- recevoir une sélection d'au moins un paramètre dudit nœud à modifier ;
- appliquer ladite valeur du paramètre externe à ce au moins un nœud ;
- traiter lesdits paramètres, y compris le paramètre modifié, de façon à générer ladite carte modifiée.

De manière préférentielle, une source externe peut être sélectionnée parmi la liste comprenant : une image, un son, une valeur physique. Il peut s'agir d'une valeur d'intensité d'un courant, d'un champ magnétique, d'une force, d'une température, etc. Les possibilités de sources externes sont donc particulièrement vastes. Les divers paramètres permettant de constituer une image, tels que les niveaux de couleur (en particulier vert, bleu et rouge), la luminance, le gradient, etc, sont particulièrement avantageux avec la méthode selon l'invention.

Selon un mode de réalisation avantageux, la méthode comporte également l'étape consistant à fournir au moins un accesseur, susceptible d'assurer la compatibilité entre le paramètre de la source externe et le paramètre de la source à modifier.

L'accesseur peut, par exemple, modifier ou adapter le format du paramètre provenant de la source externe de façon à rendre son format ou type compatible avec le paramètre de l'arbre sur lequel ce paramètre externe est prévu être appliqué. Les accesseurs utilisés sont avantageusement des accesseurs de type connus. Par exemple, un accesseur peut recevoir un paramètre externe correspondant au niveau de rouge, de vert ou de bleu. Il s'agit alors d'adapter l'échelle, par exemple 0 à 250, pour une échelle de couleur, à une échelle entre 0 et 1 pour un paramètre de l'arbre tel que H ou P, une échelle en pourcentage pour Dx ou Dy, etc.

En plus des accesseurs classiques, l'invention peut également utiliser des moments d'ordre n (discrets ou continus), des opérateurs différentiels (discrets ou continus). Ces deux familles constituent en fait le cœur ou l'élément principal de nombreux exemples d'accesseurs.

Selon un mode de réalisation avantageux, ladite carte ainsi produite est une carte de traitement d'image.

Une telle carte de traitement d'image est donc susceptible d'être utilisée pour traiter ou modifier au moins une image ou encore une série d'images, comme par exemple une séquence vidéo.

De manière avantageuse, une carte générée ou modifiée selon la présente méthode est modifiable localement.

De manière avantageuse le procédé comporte par ailleurs les étapes consistant à :

- recevoir une sélection d'au moins un autre nœud, d'au moins un étage ;
- recevoir une sélection d'au moins un paramètre de ce ou ces autres nœuds ;
- appliquer une nouvelle valeur pour ces nœuds ;
- générer la carte en fonction au moins de ces valeurs.

De manière avantageuse, le sélecteur permettant de sélectionner le ou les nœuds et/ou le ou les paramètres, est actionnable par un moyen de commande (tel qu'un logiciel, une machine, etc.) De cette façon, il est possible de générer ou modifier une carte en fonction d'une part de paramètres externes et d'autre part à l'aide de paramètres attribués soit par l'utilisateur ou encore par des moyens autonomes tels que des logiciels, machines, etc.

Selon un mode de réalisation, une carte procédurale à structure en arbre peut avantageusement être représentée par une équation du type:

$$\sum_{(j,\,k)\,\epsilon T} F\,(2^j x - k)$$

dans laquelle:

- F est une fonction (ou morphlette) $R^n \rightarrow R$
- x est un vecteur du type $(x_1, x_2,...., x_n)$;
- T est un arbre comprenant des noeuds (j, k) et dans lequel

  - j représente l'étage sélectionné, parmi un nombre total d'étages potentiels jmax (j $\epsilon$ (0, 1, 2, ...., jmax)
  - k est un vecteur de déplacement pour chaque nœud N, du type $(x_1, x_2,..., x_n)$

Selon un mode de réalisation, les paramètres modifiables sont avantageusement sélectionnés dans la liste comprenant: une morphlette F, le nombre maximum d'étages (jmax).

Selon un autre mode de réalisation, une carte est susceptible d'être représentée par une équation du type:

$$\sum_{(j,\,k)\epsilon T_{D,p}} 2^{-jH} F\,(2^j x - k)\,\xi_{(j,\,k)}$$

dans laquelle:

- F est une fonction (ou morphlette) $Rn \rightarrow R$
- x est un vecteur du type $(x_1, x_2,...., x_n)$;

- $T_{D,p}$ représente un arbre pourvu d'un paramètre d'intermittence (p), comportant des noeuds (j, k), et une valeur de déplacement (D), dans lesquels

  - j indique l'étage sélectionné, parmi un nombre total d'étages potentiels jmax (j $\epsilon$ (0, 1, 2, ...., jmax)
  - k est un vecteur de déplacement pour chaque nœud N de type $(x_1, x_2,...., x_n)$

- H représente une valeur de rugosité;
- $\xi$ représente un nombre aléatoire.

Selon un autre mode de réalisation avantageux, les paramètres modifiables sont sélectionnés dans la liste comprenant : une morphlette F, le nombre maximum d'étages (jmax), le paramètre de Hurst (H), un nombre aléatoire ($\xi$), un paramètre d'intermittence (p), une valeur de déplacement (D).

La somme est avantageusement une somme généralisée. Tout type d'opération ou de fonction peut ainsi être utilisé, comme par exemple la soustraction, la multiplication, la fonction maximum ou minimum, etc.

Les paramètres peuvent avantageusement être affectés de façon récursive aux noeuds enfants des nœuds sélectionnés.

Une carte peut avantageusement être dépendante du temps.

L'invention prévoit également un outil de génération ou de modification cartes procédurales pour la mise en œuvre de la méthode présentée ci-desssus, permettant la génération ou la modification de cartes procédurales à structure en arbre, comportant une pluralité d'étages chacune avec au moins un nœud auquel est associé au moins un paramètre, comprenant :

- un moyen de connexion au moins temporaire à au moins une source externe de paramètre ;
- un outil de sélection de nœuds permettant la sélection d'au moins un nœud d'un étage;
- un outil de sélection et de modification de paramètres de cartes, pour d'une part sélectionner un paramètre à modifier, et d'autre part permettre l'entrée de la nouvelle valeur du paramètre ;
- une unité de traitement (calculateur ou microprocesseur) destinée à traiter lesdits paramètres (tant ceux modifiés que les autres non changés), de façon à générer ladite carte de traitement d'image modifiée ;
- des instructions de mise en œuvre, pour assurer le fonctionnement de l'outil et notamment de l'unité de traitement ;
- une sortie, permettant de transmettre la carte modifiée.

Ledit outil de génération ou de modification cartes procédurales comporte de préférence au moins un accesseur, susceptible de recevoir le paramètre externe et d'assurer la compatibilité entre les paramètres externes et les paramètres de l'arbre à générer.

De manière avantageuse, l'outil de sélection et de modification de paramètre comporte, pour au moins un paramètre, un sélecteur, afin de permettre de choisir l'origine du paramètre de l'arbre à générer.

Cette origine peut être de deux provenances principales : externe, comme par exemple un paramètre d'une image, un son, un paramètre lié au temps, à un courant ou impulsion électrique, une vibration, une valeur physique telle que la température, la vitesse, la puissance ou force, etc. Un paramètre peut également être fxé ou modifié par un utilisateur, à l'aide d'un outil permettant d'attribuer ou de modifier une valeur, telle qu'un curseur, un bouton de réglage, un menu déroulant, etc.

L'invention prévoit également un outil de génération ou modification de cartes procédurales pour la mise en œuvre de la méthode présentée préalablement, et permettant la génération ou la modification de cartes procédurales à structure en arbre, comportant une pluralité d'étages, chacun avec au moins un nœud auquel est associé au moins un paramètre, comprenant :

- une unité d'entrée de paramètres de cartes, pour recevoir au moins un paramètre provenant d'au moins un objet ou source externe,
- une unité de traitement destinée à traiter lesdits paramètres, de façon à générer ladite carte de traitement de sorte que la carte ait une structure en arbre ;
- des instructions de mise en œuvre, pour assurer le fonctionnement de l'outil et notamment de l'unité de traitement ;
- une sortie, permettant de transmettre les cartes produites.

Selon un mode de réalisation avantageux, ledit outil de génération de cartes procédurales comprend au moins un accesseur, susceptible de recevoir ledit paramètre externe.

De manière avantageuse, ledit accesseur transforme ledit paramètre externe de façon à le rendre compatible avec le paramètre de l'arbre qu'il doit générer.

De manière avantageuse, ledit outil de sélection et de modification de paramètre comporte, pour au moins un paramètre, un sélecteur, afin de permettre de choisir l'origine du paramètre de l'arbre à générer. Selon la configuration, l'utilisateur peut alors choisir, soit pour un seul, soit pour une pluralité de paramètres, d'attribuer une valeur à son choix (une valeur utilisateur) au moyen d'un outil interne (tel un curseur, une molette, un menu déroulant, etc), soit d'attribuer une valeur provenant d'un objet ou source externe, comme par exemple une image numérique.

De manière avantageuse, l'outil de sélection de noeuds comporte une unité de sélection de profondeur, permettant de sélectionner l'étendue de la modification à réaliser sur l'arbre.

Selon un exemple de réalisation avantageux, l'outil de sélection de noeuds comporte un cadre mobile de localisation de nœud-objet ou de nœud. Ledit cadre peut être commandé par un curseur directement depuis l'interface de travail.

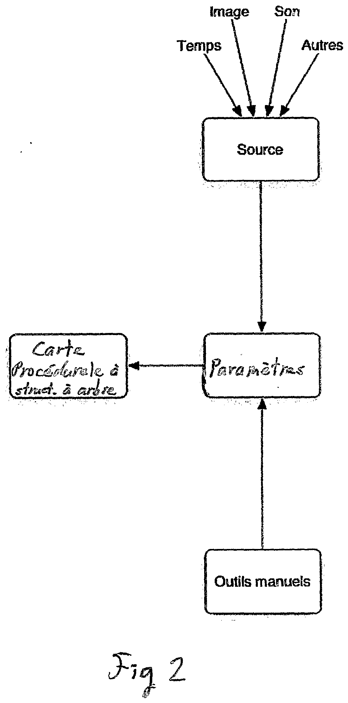

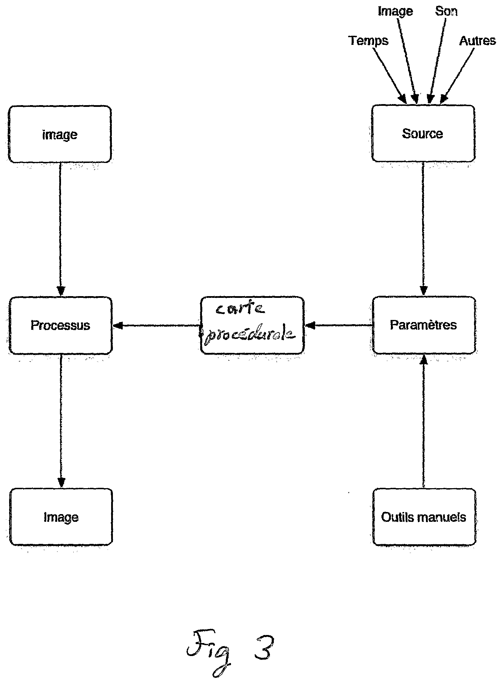

L'invention sera maintenant décrite en référence aux figures 1 à 8 jointes, présentées uniquement à des fins d'exemples non limitatifs, dans lesquelles :

- la figure 1 illustre un exemple d'interface de travail conformément à la méthode et aux outils selon l'invention ;
- la figure 2 illustre le principe de base de la méthode selon l'invention ;
- la figure 3 illustre le principe de base d'un exemple d'application d'une carte procédurale produite grâce à l'invention ;
- la figure 4 montre une image de base pouvant servir de source externe pour puiser des paramètres afin de créer ou modifier des cartes procédurales selon l'invention ;
- les figures 5 et 6 illustrent un exemple d'une carte produite en utilisant l'image de base de la figure 4 pour fournir un ou plusieurs paramètres. La flèche indique un nœud-objet qui fait l'objet d'une modification (une légère translation) entre la figure 5 et la figure 6 ;
- les figures 7 et 8 illustrent d'autres exemples de cartes produites en utilisant l'image de base de al figure 4 afin de fournir un ou plusieurs paramètres ;
- les figures 9 à 14 illustrent schématiquement les principes et les paramètres utilisés pour les cartes procédurales à structure à arbre ;
- les figures 15 à 19 illustrent des exemples très simples de cartes procédurales montrant l'effet d'une structure à arbre ;
- les figures 20 à 23 illustrent des exemples simples montrant les types de modifications locales que l'invention permet de réaliser ;

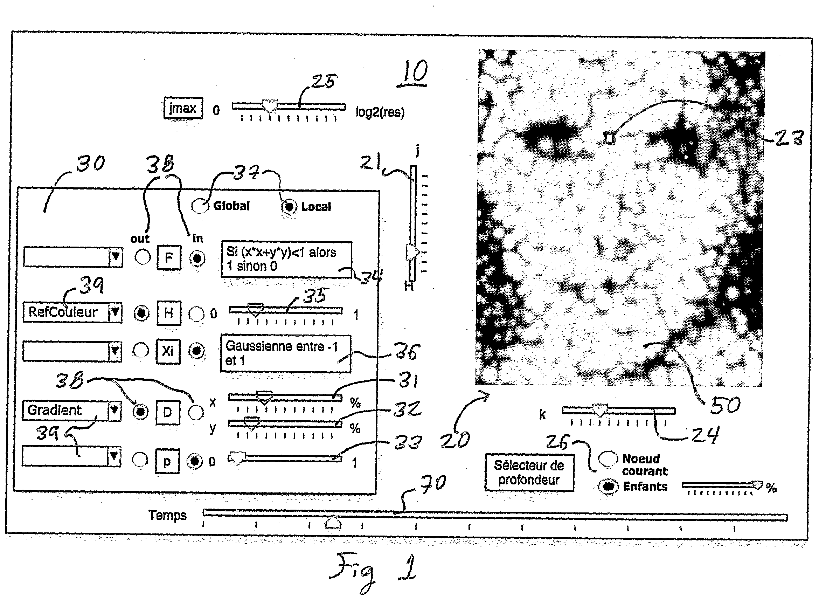

La figure 1 présente un exemple d'interface pour la mise en œuvre de la méthode et du dispositif selon l'invention.

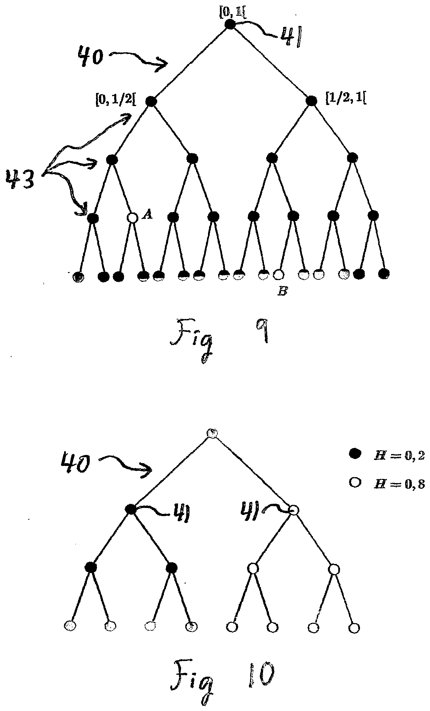

La présente invention est basée sur l'utilisation de cartes procédurales à structure à arbre. Les figures 9 à 14 illustrent des exemples de tels arbres (pour le cas spécifiques dans lequel n=1, où n est la dimension du support. Par exemple, n=2 pour une image, n=3 pour un volume, n= 1 pour une courbe). Dans l'exemple de la figure 9, à j=0, on retrouve un nœud simple. Deux nœuds enfants ou fils se trouvent au niveau j=1, et quatre au niveau j=2. Tous les nœuds sont similaires. La fonction F contribue pour beaucoup à la définition de la forme de base du nœud-objet. Elle est également désignée dans ce document par le terme « morphlet ». Un morphlet peut prendre pratiquement n'importe quelle forme. Une telle carte procédurale à structure en arbre peut être représentée par l'équation suivante :

$$\sum_{j}\sum_{k} F\left(2^{j}x - k\right), \left(j, k\right)$$

formant un arbre T, et également représentée dans de document par :

$$\sum_{(j, k) \in T} F\left(2^{j}x - k\right)$$

dans lequel:

- F est une fonction ou morphlet $R^{n} \rightarrow R$
- x est un vecteur du type $(x_1, x_2, ...., x_n)$;
- T est un arbre comprenant des noeuds (j, k) et dans lequel

    - j indique le niveau actuel, parmi un nombre potentiel total de niveaux jmax (j $\varepsilon$ (0, 1, 2, ...., jmax);
    - k est un vecteur de déplacement pour chaque noeud N et du type $(x_1, x_2, ...., x_n)$.

Les figures 9 à 14 illustrent des exemples de modifications locales qu'il est possible de réaliser grâce à la structure en arbre selon l'invention. Par exemple, à la figure 10, des valeurs différentes de H ont été attribuées. Ainsi, le demi arbre de gauche de la figure 10 comporte une valeur de H de 0,2 ; celui de droite, une valeur de H de 0,8.

L'arbre est symétrique mais l'invention permet de produire des arbres non symétriques. Ce type de modification peut permettre de modifier localement le niveau de rugosité d'une carte : en tendant vers H=1 une surface sera plus lisse ; en tendant vers H=0, une surface sera plus rugueuse.

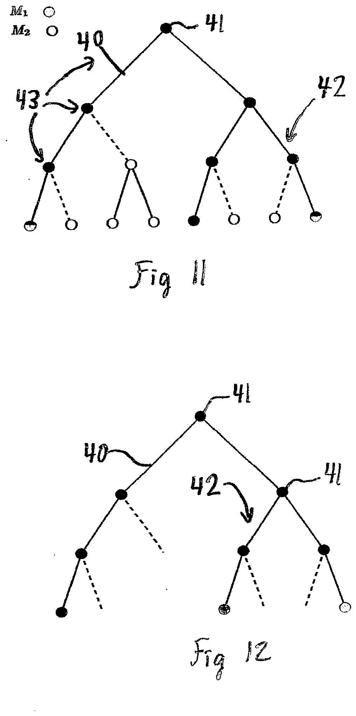

A la figure 12, certains sous-arbres ou branches sont supprimés. Le paramètre P représente une probabilité de supprimer des branches d'un arbre. Avec p=0,2, il y a une probabilité de o,2 de supprimer des branches ; pour p=0,8, cette probabilité est de 0,8. Ce paramètre peut être ajusté pour conserver ou non un forte densité de sous-arbres.

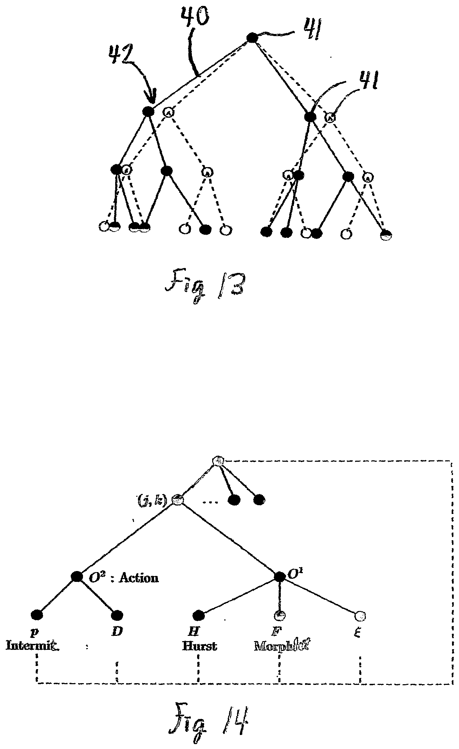

La figure 13 illustre les possibilités offertes par le paramètre D, soit le décalage. Le décalage permet de déplacer un ou plusieurs noeuds de leurs positions d'origine.

Enfin, la figure 14 illustre les grands types de paramètres avec lesquels l'invention permet de travailler pour créer ou modifier des cartes procédurales : les paramètres d'action tels que p et D, et les paramètres de structure, tels que H, F et $\xi$.

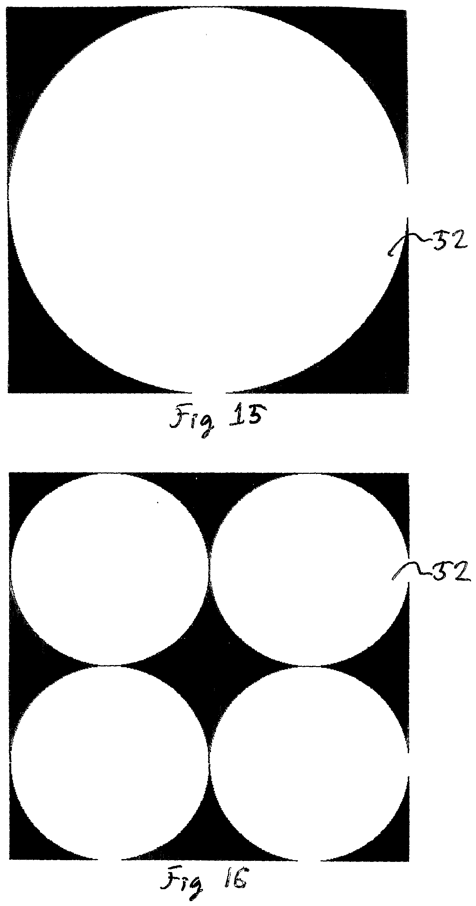

Les figures 15 à 19 illustrent des exemples de cartes procédurales possédant des structures en arbre. Par exemple, la figure 1 présente un exemple dans lequel un morphlet de type F= 1, si X2 + y2 < 1, autrement, F=0. A j=0, avec un nœud simple, un nœud-objet NO simple est généré, prenant la forme d'un disque uniforme et centré (figure 15).

Pour j=1, au second niveau, figure 16, on retrouve quatre nœud-objets, dans cet exemple, quatre disque de plus petite taille, chacun étant uniforme. Cette couche est donc divisée en quatre sections, chacune formant un nœud-objet. Chaque section occupe ¼ de la carte initiale, selon l'arrangement de type quadratique et uniforme de cet exemple. On voit donc l'effet des principaux paramètres : j indique le niveau actuel, k permet le déplacement de nœud-objets, dans cet exemple depuis le centre de la carte vers le centre d'un des quarts. Le morphlet de base F demeure inchangé.

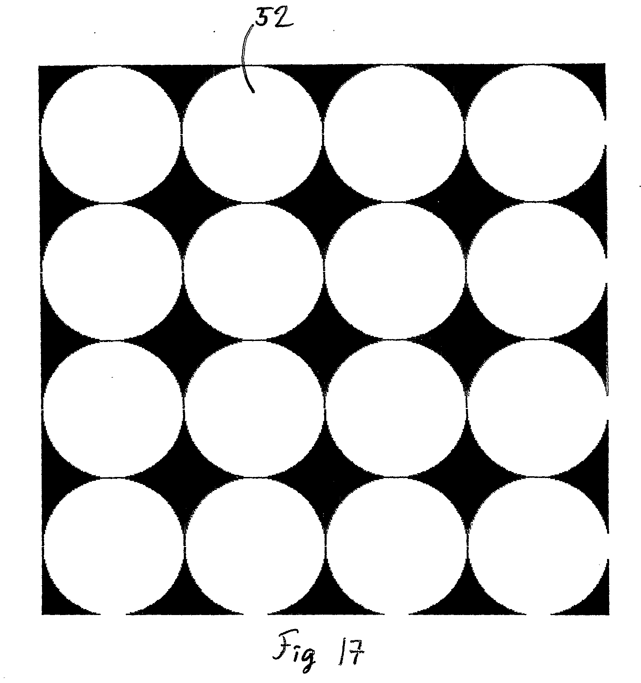

La figure suivante (figure 17) illustre le 3e niveau (j=2), pour un même morphlet. Depuis le niveau précédent, il y a une nouvelle subdivision en 4 quarts, chaque quart possédant son nœud-objet, dans cet exemple, un disque similaire, mais toujours plus petit.

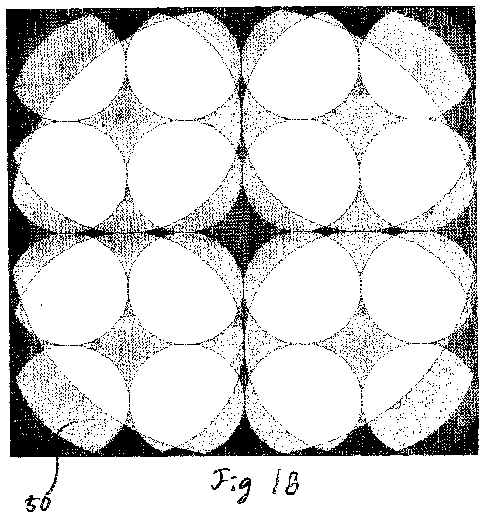

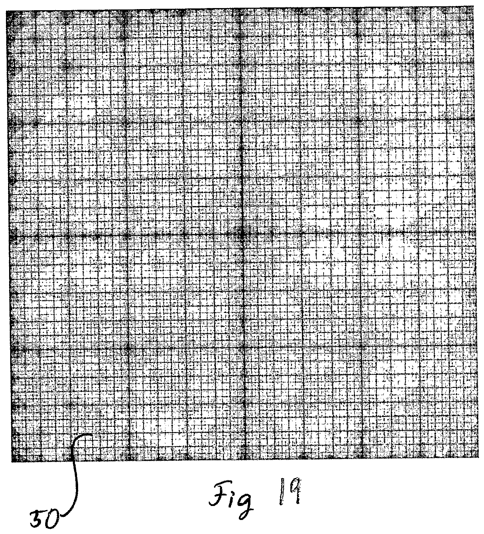

La figure 18 montre la somme de ces différentes couches. Cet exemple très simple permet de bien visualiser les formes de base de chaque niveau. La figure 19 illustre une somme du même type mais pour un nombre plus élevé de niveaux, donc un nombre plus élevé de nœud-objets, d'où une structure plus complexe. Dans cet exemple.

EXEMPLES DE MODIFICATIONS

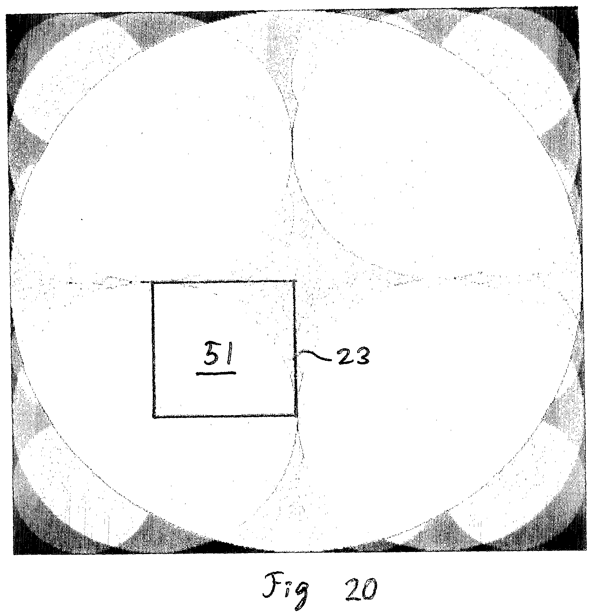

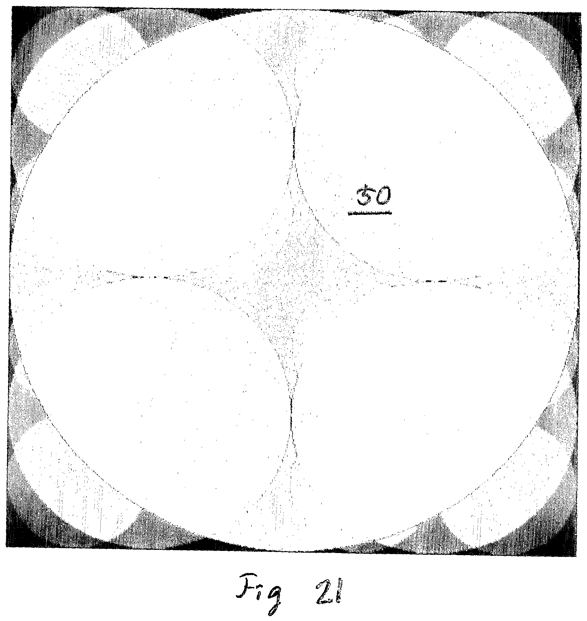

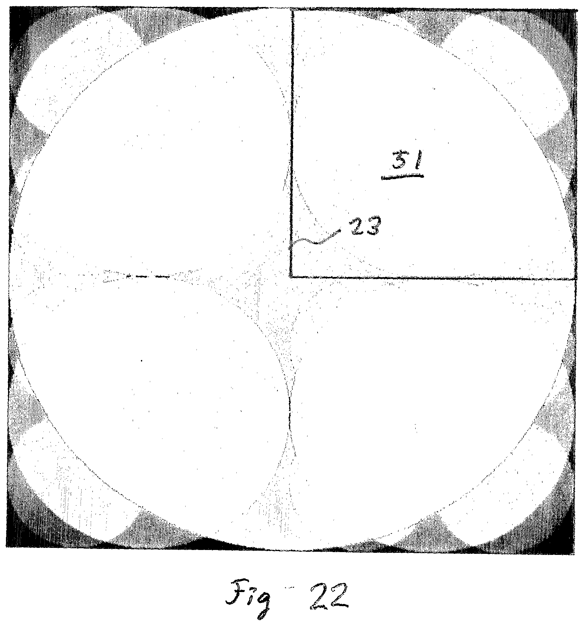

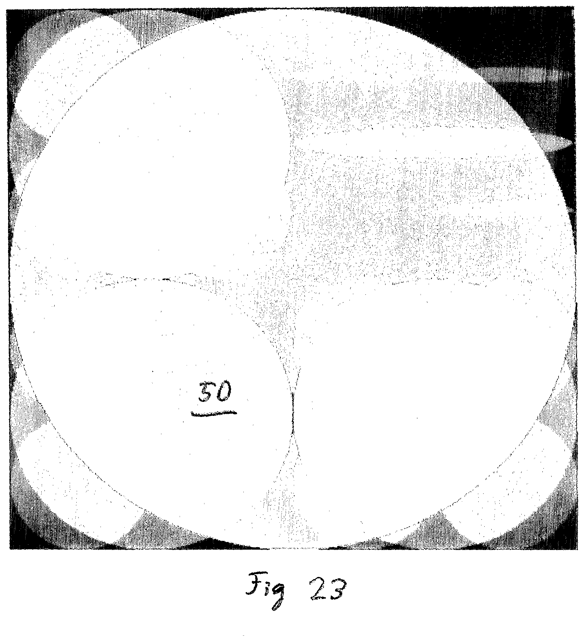

Les figures 20 à 23 illustrent des exemples de modifications de cartes qu'il est possible de réaliser à l'aide de la méthode et des outils selon l'invention. A la figure 20, le cadre mobile 23 de l'outil de sélection de nœud 20 est localisé sur un nœud-objet 51 à traiter. La figure suivante illustre le résultat suite à la suppression de ce nœud. On voit très bien que les modifications peuvent donc être faites à un niveau local, sans affecter le reste de la carte. Les figures 22 et 23 illustrent un processus similaire de modification des paramètres au niveau d'un nœud. Dans cet exemple, la fonction ou morphlet F a été modifiée, affectant de ce fait la forme de base du nœud-objet de ce quart de carte. En effet, on aperçoit à la figure 23 les disques de la figure 22 qui sont à présent amincis ou écrasés.

La figure 1 illustre un exemple d'une interface de travail obtenue par un outil 10 selon l'invention. Selon diverses variantes de réalisation, un tel outil peut être fourni soit pour la modification de cartes procédurales existantes, soit pour la génération et la modification de telles cartes.

L'outil de base comporte un outil 20 de sélection de nœuds, comprenant un sélecteur 21 de niveau J, et un sélecteur de nœud, permettant la sélection d'un nœud donné dans le niveau choisi. En pratique, tel que décrit ci-après, l'utilisateur sélectionne une couche, correspondant à un niveau J donné et un nœud-objet, correspondant à un nœud K.

L'outil 10 comporte un outil de paramétrage 30, permettant de sélectionner un paramètre, soit pour lui donner une première valeur, ou encore pour la modifier ou l'ajuster, selon le cas. Pour modifier une carte, un ou plusieurs nœuds 41 sont tout d'abord sélectionnés. Un outil tel que le sélecteur 20 de nœud offre cette possibilité. Un tel outil peut avantageusement fournir deux fonctions : une unité 21 de sélection de niveau, et une unité de sélection de nœud.

L'outil de sélection de noeud comporte une cible d'écran mobile 23. Cette cible est avantageusement configurée de façon à permettre de délimiter au moins un nœud-objet 51 dans une couche donnée. Dans les exemples illustrés, la cible est de forme sensiblement carrée. Pour faciliter la sélection des nœuds, l'outil comporte un mode de déplacement de façon à permettre l'auto-positionnement de la cible sur un nœud-objet ou sur un ensemble de nœuds-objets, par exemple les nœuds les plus près, lorsque la cible n'est pas parfaitement positionnée par l'utilisateur sur un nœud. La cible peut être commandée par tout type de commande classique d'un ordinateur, telle une souris, un pointeur, des touches du clavier telles que les flèches, ou une commande à distance telle une machine, un circuit spécialement conçu ou un logiciel de pilotage. Elle peut également être contrôlée directement depuis l'interface de l'outil 20 de sélection de nœud, par exemple à l'aide d'un curseur 24 contrôlant le déplacement de la cible 23 sur la carte.

De manière avantageuse, l'outil 23 est configuré de sorte que lorsqu'un niveau est sélectionné, la forme et la taille du cadre 23 s'adapte à ceux du noeud-objet 51 du niveau correspondant. L'outil 23 permet de sélectionner tout nœud du niveau sélectionné.

Selon une autre variante, l'outil 20 de sélection de noeuds comporte un moyen de mise en évidence, permettant de bien indiquer à l'utilisateur quels nœuds sont sélectionnés. Une telle indication peut être réalisée par changement de couleur ou d'intensité, un clignotement, ou tout autre moyen visuel efficace.

L'outil 10 comporte de préférence un sélecteur 26 de profondeur, permettant à l'utilisateur d'indiquer si l'opération en cours concerne uniquement les noeuds du niveau sélectionné ou si les sous-arbres doivent également être traités de façon similaire.

L'outil de paramétrage 30 permet tout d'abord de sélectionner un paramètre à considérer .Puis, sa nouvelle (modifiée ou initiale) peut être entrée. L'outil est avantageusement adapté afin de pouvoir traiter au moins un, mais de préférence tous les types de paramètres illustrés dans ce document, tels que: F: 34, H: 35, $\xi$: 36, p: 33, D(x): 31, D(y): 32.

L'exemple illustré à la figure 1 permet deux modes d'entrée de paramètres. Tout d'abord, un mode interne. Lorsque le sélecteur de mode interne/externe 38 est sur la position « in », un outil interne, intégré à l'interface, permet de conférer une valeur au paramètre sélectionné. Par exemple, à la figure 1, on voit que les sélecteurs de mode des paramètres F, $\xi$ et p sont en position interne. L'interface permet alors à l'utilisateur de donner une valeur aux différents paramètres. Par exemple, pour F, l'utilisateur entre une fonction, telle que celle illustrée. Selon une variante, un menu déroulant peut proposer à l'utilisateur une série de fonctions parmi lesquelles il peut choisir. Il en est de même pour le paramètre $\xi$. Pour le paramètre p, l'utilisateur donne une valeur, par exemple entre 0 et 1, par exemple à l'aide d'un curseur ou autre outil similaire. Un menu déroulant peut aussi être proposé. Pour les paramètres H et D (pour x et y), dans le cas où l'utilisateur choisirait le mode interne, les valeurs peuvent être entrées de façon similaires à celle du paramètre p, avec des valeurs par exemple entre 0 et 1 pour H, et en pourcentage pour D.

Pour les paramètres devant recevoir leur valeur depuis une source externe, l'utilisateur choisit quel type de paramètre externe il souhaite considérer. Par exemple, pour une image numérique, il peut souhaiter le niveau d'une ou de plusieurs couleurs ; un gradient, tel que la valeur du gradient en un point donné selon un vecteur donné ; une valeur de luminance, la valeur du Laplacien en un point donné ; la distance ou l'écart par rapport à une couleur de son choix, etc. Un sélecteur de paramètre externe 39, comme par exemple un menu déroulant, peut permettre à l'utilisateur de sélectionner le paramètre externe de son choix.

Un pointeur ou curseur peut par ailleurs compléter l'outil, par exemple pour permettre à l'utilisateur de pointer un emplacement donné d'une image où il souhaite considérer le paramètre qui l'intéresse.

Un ou plusieurs accesseurs sont avantageusement prévus de façon à permettre de convertir les valeurs des paramètres externes en valeurs adaptée aux paramètres F, H, $\xi$, p et D.

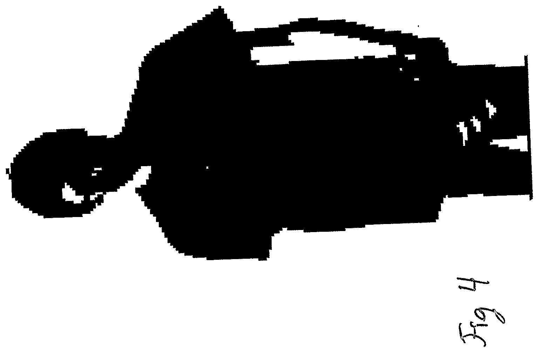

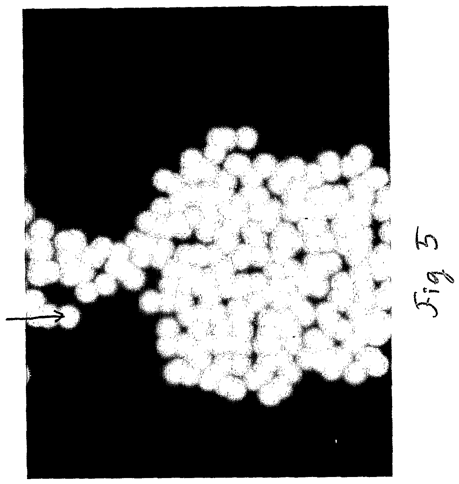

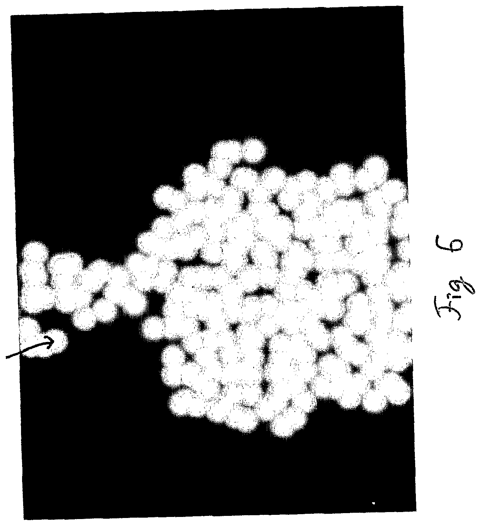

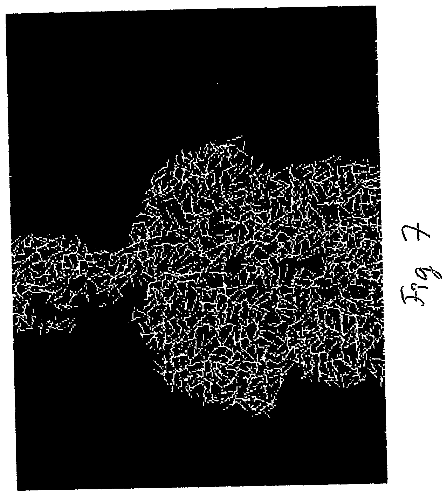

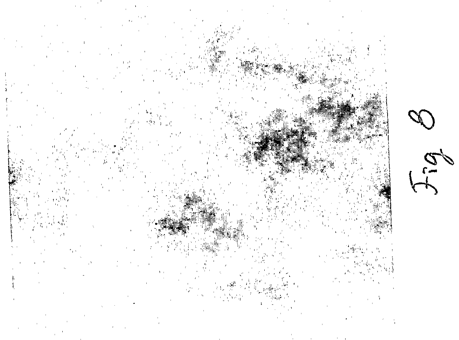

Selon une variante non illustrée, seule un mode pourrait être présent, à savoir le mode externe. Dans un tel cas, soit les paramètres ont une valeur fixe, soit ils reçoivent une valeur à partir d'une source externe. Il n'y a alors pas de sélecteur de mode. Les figures 5 et 6 illustrent un exemple réalisé avec la méthode et outils selon l'invention. Ces cartes procédurales ont été paramétrées (au moins en partie) à partir de l'image de base de la figure 4. La carte de la figure 6 est la même que celle de la figure 5, sauf à l'endroit indiqué par la flèche de localisation, qui indique un nœud-objet qui a été légèrement déplacé sur la figure 6 par rapport à son emplacement sur la figure 5. Les figures 7 et 8 illustrent d'autres types de cartes, également générées à partir de paramètres de l'image de base de la figure 4. On voit donc que les possibilités de paramétrage sont très vaste, même à partir d'une seule image de base.

L'outil 10 comporte de préférence un sélecteur Global (G) / Local (L). Le mode global est sélectionné à l'aide du sélecteur 37 si on souhaite modifier une carte dans sa totalité. Les unités de niveau et de sélection de nœud peuvent alors être désactivés ou pas utilisés. Les modifications sont réalisées telles que décrit préalablement, mais l'utilisateur a la possibilité d'appliquer ces modifications à une carte entière. Bien sûr, il peut procéder à certaines modifications d'une même carte en mode local, et d'autres en mode global. En mode global, les étapes relatives à la sélection d'un niveau et d'un nœud ne sont évidemment pas applicables.

Les modifications locales impliquent que les modifications sont intégrées au niveau des nœud-objets, pour au moins un nœud-objet.

L'outil 10 peut également permettre la possibilité de supprimer un ou plusieurs noeuds. Une suppression « virtuelle » peut être également réalisée en utilisant un morphlet F=0.

La méthode ainsi que les outils présentés dans le cadre de la présente invention ont été présentés avec des images et cartes simples. La même méthode et les mêmes outils s'appliquent de façon similaire à des séries d'images telles que des séquences vidéo.

## Revendications

1. Interface de travail comprenant un outil de génération ou modification de cartes procédurales (10), permettant la génération ou la modification de cartes procédurales (50) à structure en arbre (40), comportant une pluralité d'étages (43), chacun avec au moins un nœud (41) auquel est associé au moins un paramètre, comprenant :

   - un moyen de connexion au moins temporaire à au moins une source externe de paramètre ;
   - un outil de sélection de nœuds (20) permettant la sélection d'au moins un nœud (41 ; 51) d'un étage (43; 52) d'une carte procédurale ;
   - un outil de sélection et de modification de paramètres (30) de cartes procédurales, pour d'une part sélectionner un paramètre (31, 32, 33, 34, 35, 36) à modifier, et d'autre part permettre l'entrée de la nouvelle valeur du paramètre, selon deux modes d'entrée de paramètres :
   - un mode interne, mettant en œuvre un outil interne intégré à l'interface et permettant à l'utilisateur de donner une valeur aux différents paramètres ;
   - un mode externe, mettant en œuvre un sélecteur (39) de paramètre externe, permettant à l'utilisateur de sélectionner un paramètre de son choix de la source externe, pour recevoir une valeur de ce paramètre depuis ladite source externe, ladite source externe étant une image numérique ;
   - une unité de traitement destinée à générer ladite carte de traitement en fonction de la valeur dudit paramètre externe de sorte que la carte ait une structure en arbre ;
   - des instructions de mise en œuvre, pour assurer le fonctionnement de l'outil et notamment de l'unité de traitement ;
   - une sortie, permettant de transmettre les cartes produites.

2. Interface de travail comprenant un outil de génération ou de modification de cartes procédurales selon la revendication 1, dans lequel le paramètre de l'image numérique de la source externe à considérer est le niveau d'une ou de plusieurs couleurs, ou un gradient, tel que la valeur du gradient en un point donné selon un vecteur donné, ou une valeur de luminance, ou la valeur du Laplacien en un point donné, ou la distance ou l'écart par rapport à une couleur donnée.

3. Interface de travail comprenant un outil de génération ou de modification de cartes procédurales selon l'une des revendications 1 ou 2, dans lequel l'outil de sélection de nœuds comporte une unité de sélection de profondeur (26), permettant de sélectionner l'étendue de la modification à réaliser sur l'arbre.

4. Interface de travail comprenant un outil de génération ou de modification de cartes procédurales selon l'une des revendications 1 à 3, dans lequel l'outil de sélection de nœuds comporte un cadre mobile (23) de localisation de nœud-objet (51) ou de nœud (41).

5. Procédé implémentée par ordinateur pour générer ou modifier une carte procédurale (50) à l'aide d'une interface de travail selon l'une des revendications 1 à 4, ladite carte procédurale étant à structure en arbre (40) comportant une pluralité d'étages (43), chacun avec au moins un noeud (41) auquel est associé au moins un paramètre, comportant les étapes consistant à :

   - établir une connexion au moins temporaire avec une source externe apte à fournir au moins une valeur d'au moins un paramètre susceptible d'être appliqué à une carte procédurale ;
   - paramétrer une carte procédurale grâce aux sous-étapes consistant à :

      i) fournir une interface de travail selon l'une des revendications 1 à 4 ;
      ii) recevoir la sélection d'au moins un nœud, d'au moins un étage auquel les paramètres sont destinés ;
      iii)

         - pour les paramètres entrés selon le mode interne, permettre à l'utilisateur de donner une ou plusieurs valeurs ;
         - pour les paramètres entrés selon le mode externe, permettre à l'utilisateur de sélectionner, à l'aide d'un sélecteur de paramètre externe, le paramètre externe de son choix d'une source externe et recevoir la valeur correspondante depuis ladite source externe, ladite source externe étant une image numérique ;

iv) appliquer les nouvelles valeurs des paramètres à la portion sélectionnée de la carte ;

v) générer la carte correspondante.

6. Procédé pour générer ou modifier une carte procédurale selon la revendication 5, dans lequel le paramètre de l'image numérique de la source externe à considérer est le niveau d'une ou de plusieurs couleurs, ou un gradient, tel que la valeur du gradient en un point donné selon un vecteur donné, ou une valeur de luminance, ou la valeur du Laplacien en un point donné, ou la distance ou l'écart par rapport à une couleur donnée.

7. Procédé pour générer ou modifier une carte procédurale selon la revendication 6, comprenant également les étapes consistant à :

- recevoir une sélection d'au moins un paramètre dudit nœud à modifier ;
- appliquer ladite valeur du paramètre externe à ce au moins un nœud ;
- traiter lesdits paramètres, y compris le paramètre modifié, de façon à générer ladite carte modifiée.

8. Procédé pour générer ou modifier une carte procédurale selon l'une des revendications 5 à 7, dans lequel ladite carte ainsi produite est une carte procédurale modifiable localement.

9. Procédé pour générer ou modifier une carte procédurale selon l'une des revendications 5 à 8, dans lequel la carte procédurale à structure en arbre peut être représentée par une équation du type:

$$\Sigma\ F\ (2^j\ x - k)$$

$$(j\ ,\ k)\ \varepsilon T$$

dans laquelle :

- F est une fonction (ou morphlette) $R^n \to R$
- x est un vecteur du type $(x_1, x_2, ...., x_n)$;
- T est un arbre comprenant des nœuds (j, k) et dans lequel
- j représente l'étage sélectionné, parmi un nombre total d'étages potentiels jmax (j $\varepsilon$ (0, 1, 2, ...., jmax)
- k est un vecteur de déplacement pour chaque nœud N, du type $(x_1, x_2,.., x_n)$

10. Procédé pour générer ou modifier une carte procédurale selon la revendication 9, dans lequel les paramètres modifiables sont sélectionnés dans la liste comprenant : une morphlette F, le nombre maximum d'étages (jmax).

11. Procédé pour générer ou modifier une carte procédurale selon l'une des revendications 5 à 9, dans lequel la carte est susceptible d'être représentée par une équation du type :

$$\Sigma\ \ 2^{-jH}\ F\ (2^j\ x - k)\ \xi_{(j\ ,\ k)}$$

$$(j\ ,\ k)\varepsilon T_{D,p}$$

dans laquelle :

- F est une fonction (ou morphlette) Rn → R
- x est un vecteur du type $(x_1, x_2, ...., x_n)$;
- $T_{D,p}$ représente un arbre pourvu d'un paramètre d'intermittence (p), comportant des nœuds (j, k), et une valeur de déplacement (D), dans lesquels
- j indique l'étage sélectionné, parmi un nombre total d'étages potentiels jmax (j $\varepsilon$ (0, 1, 2, ...., jmax)
- k est un vecteur de déplacement pour chaque nœud N de type $(x_1, x_2, ...., x_n)$
- H représente une valeur de rugosité;
- $\xi$ représente un nombre aléatoire.

12. Procédé pour générer ou modifier une carte procédurale selon la revendication 11, dans lequel les paramètres modifiables sont sélectionnés dans la liste comprenant : une morphlette F, le nombre maximum d'étages (jmax), le paramètre de Hurst (H), un nombre aléatoire ($\xi$), un paramètre d'intermittence (p), une valeur de déplacement (D).

13. Procédé pour générer ou modifier une carte procédurale selon l'une des revendications 9 à 12, dans lequel la somme est une somme généralisée.

14. Procédé pour générer ou modifier une carte procédurale selon l'une des revendications 5 à 13, dans lequel les paramètres sont affectés de façon récursive aux nœuds enfants des nœuds sélectionnés.

15. Procédé pour générer ou modifier une carte procédurale selon l'une des revendications 5 à 14, dans lequel la carte est dépendante du temps.

**Patentansprüche**

1. Arbeitsoberfläche mit einem Werkzeug zum Erzeugen oder Ändern von Prozedur-Maps (10), die das Erzeugen oder Ändern von Prozedur-Maps (50) mit einer Baumstruktur (40) ermöglicht, die mehrere Ebenen (43) beinhaltet, jede mit mindestens einem Knoten (41), dem mindestens ein Parameter zugeordnet ist, umfassend:

- eine Einrichtung zum zumindest vorübergehenden Verbinden mit mindestens einer externen Parameterquelle;
- ein Knotenauswahlwerkzeug (20), welches das Auswählen mindestens eines Knotens (41; 51) einer Ebene (43; 52) einer Prozedur-Map ermöglicht;
- ein Werkzeug zum Auswählen und Ändern von Parametern (30) von Prozedur-Maps, um einerseits einen zu ändernden Parameter (31, 32, 33, 34, 35, 36) auszuwählen und andererseits das Eingeben des neuen Werts des Parameters nach zwei Parametereingabemodi zu ermöglichen:
- einem internen Modus, bei dem ein internes Werkzeug implementiert wird, das in die Oberfläche integriert ist und es dem Nutzer ermöglicht, für die verschiedenen Parameter einen Wert zu vergeben;
- einen externen Modus, der einen Selektor (39) für externe Parameter implementiert, der es dem Nutzer ermöglicht, einen Parameter seiner Wahl der externen Quelle auszuwählen, um einen Wert dieses Parameters von der externen Quelle zu empfangen, wobei die externe Quelle ein digitales Bild ist;
- eine Verarbeitungseinheit, die dazu ausgelegt ist, die Bearbeitungs-Map in Abhängigkeit vom Wert des externen Parameters derart zu erzeugen, dass die Map eine Baumstruktur hat;
- Implementierungsanweisungen, um das Funktionieren des Werkzeugs und insbesondere der Verarbeitungseinheit zu gewährleisten;
- einen Ausgang, der es ermöglicht, die erstellten Maps zu übertragen.

2. Arbeitsoberfläche mit einem Werkzeug zum Erzeugen oder Ändern von Prozedur-Maps nach Anspruch 1, wobei der zu betrachtende Parameter des digitalen Bildes der externen Quelle die Intensität einer oder mehrerer Farben oder ein Gradient wie der Wert des Gradienten an einem gegebenen Punkt entlang eines gegebenen Vektors oder ein Leuchtdichtewert oder der Wert des Laplace-Operators an einem gegebenen Punkt oder die Entfernung oder der Abstand in Bezug auf eine gegebenen Farbe ist.

3. Arbeitsoberfläche mit einem Werkzeug zum Erzeugen oder Ändern von Prozedur-Maps nach einem der Ansprüche 1 oder 2, wobei das Knotenauswahlwerkzeug eine Tiefenauswahleinheit (26) beinhaltet, die es ermöglicht, den Umfang der an dem Baum vorzunehmenden Änderung auszuwählen.

4. Arbeitsoberfläche mit einem Werkzeug zum Erzeugen oder Ändern von Prozedur-Maps nach einem der Ansprüche 1 bis 3, wobei das Knotenauswahlwerkzeug einen beweglichen Rahmen (23) zum Lokalisieren von Objektknoten (51) oder Knoten (41) beinhaltet.

5. Von einem Computer ausgeführtes Verfahren zum Erzeugen oder Ändern einer Prozedur-Map (50) mithilfe einer Arbeitsoberfläche nach einem der Ansprüche 1 bis 4, wobei die Prozedur-Map eine Baumstruktur (40) aufweist, die mehrere Ebenen (43) beinhaltet, jede mit mindestens einem Knoten (41), dem mindestens ein Parameter zugeordnet ist, wobei das Verfahren die folgenden Schritte umfasst:

- Aufbauen einer zumindest vorübergehenden Verbindung mit einer externen Quelle, die geeignet ist, mindestens einen Wert mindestens eines Parameters bereitzustellen, der auf eine Prozedur-Map angewandt werden kann;
- Parametrieren einer Prozedur-Map dank der folgenden Teilschritte:

i) Bereitstellen einer Arbeitsoberfläche nach einem der Ansprüche 1 bis 4;
ii) Empfangen der Auswahl mindestens eines Knotens mindestens einer Ebene, für den die Parameter bestimmt sind;
iii)

- Ermöglichen, für die nach dem internen Modus eingegebenen Parameter, dass der Nutzer einen oder mehrere Werte vergibt;
- Ermöglichen, für die nach dem externen Modus eingegebenen Parameter, dass der Benutzer mithilfe eines Selektors für externe Parameter den externen Parameter seiner Wahl einer externen Quelle auswählt und den entsprechenden Wert von der externen Quelle empfängt, wobei die externe Quelle ein digitales Bild ist;

iv) Anwenden der neuen Werte der Parameter auf den ausgewählten Abschnitt der Map;
v) Erzeugen der entsprechenden Map.

6. Verfahren zum Erzeugen oder Ändern einer Prozedur-Map nach Anspruch 5, wobei der zu betrachtende Parameter des digitalen Bildes der externen Quelle die Intensität einer oder mehrerer Farben oder ein Gradient wie der Wert des Gradienten an einem gegebenen Punkt entlang eines gegebenen Vektors oder ein Leuchtdichtewert oder der Wert des Laplace-Operators an einem gegebenen Punkt oder die Entfernung oder der Abstand in Bezug auf eine gegebenen Farbe ist.

7. Verfahren zum Erzeugen oder Ändern einer Prozedur-Map nach Anspruch 6, das ferner die folgenden Schritte umfasst:

   - Empfangen einer Auswahl mindestens eines zu ändernden Parameters des Knotens;
   - Anwenden des Werts des externen Parameters auf diesen mindestens einen Knoten;
   - Bearbeiten der Parameter, einschließlich des geänderten Parameters, so dass die geänderte Map erzeugt wird.

8. Verfahren zum Erzeugen oder Ändern einer Prozedur-Map nach einem der Ansprüche 5 bis 7, wobei die so erstellte Map eine lokal änderbare Prozedur-Map ist.

9. Verfahren zum Erzeugen oder Ändern einer Prozedur-Map nach einem der Ansprüche 5 bis 8, wobei die Prozedur-Map mit Baumstruktur durch eine Gleichung des folgenden Typs dargestellt werden kann:

$$\sum_{(j,k)\,\varepsilon T} F(2^j x - k)$$

in der:

   - F eine Funktion (oder ein Morphlet) $R^n \to R$ ist
   - x ein Vektor vom Typ $(x_1, x_2, ..., x_n)$ ist;
   - T ein Baum ist, der Knoten (j, k) umfasst und in dem
   - j die ausgewählte Ebene unter einer Gesamtzahl potenzieller Ebenen jmax (j $\varepsilon$ (0, 1, 2, ..., jmax) ist
   - k ein Verschiebungsvektor für jeden Knoten N vom Typ $(x_1, x_2, ..., x_n)$ ist.

10. Verfahren zum Erzeugen oder Ändern einer Prozedur-Map nach Anspruch 9, wobei die änderbaren Parameter aus der Liste ausgewählt sind, die umfasst: ein Morphlet F, die maximale Ebenenzahl (jmax).

11. Verfahren zum Erzeugen oder Ändern einer Prozedur-Map nach einem der Ansprüche 5 bis 9, wobei die Map mit Baumstruktur durch eine Gleichung des folgenden Typs dargestellt werden kann:

$$\sum_{(j,k)\varepsilon T_{D,p}} 2^{-jH} F(2^j x - k)\, \xi_{(j,k)}$$

in der:

   - F eine Funktion (oder ein Morphlet) $R_n \to R$ ist
   - x ein Vektor vom Typ $(x_1, x_2, ..., x_n)$ ist;
   - $T_{D,p}$ einen Baum darstellt, der Knoten (j, k) beinhaltet und der mit einem Intermittenzparameter (p) und einem Verschiebungsvektor (D) versehen ist, wobei
   - j die ausgewählte Ebene unter einer Gesamtzahl potenzieller Ebenen jmax (j $\varepsilon$ (0, 1, 2, ..., jmax) angibt
   - k ein Verschiebungsvektor für jeden Knoten N vom Typ $(x_1, x_2, ..., x_n)$ ist;
   - H einen Rauheitswert darstellt;
   - $\xi$ eine Zufallszahl darstellt.

12. Verfahren zum Erzeugen oder Ändern einer Prozedur-Map nach Anspruch 11, wobei die änderbaren Parameter aus der Liste ausgewählt sind, die umfasst: ein Morphlet F, die maximale Ebenenzahl (jmax), den Hurst-Parameter (H), eine Zufallszahl ($\xi$), einen Intermittenzparameter (p), einen Verschiebungswert (D).

13. Verfahren zum Erzeugen oder Ändern einer Prozedur-Map nach einem der Ansprüche 9 bis 12, wobei die Summe eine generalisierte Summe ist.

14. Verfahren zum Erzeugen oder Ändern einer Prozedur-Map nach einem der Ansprüche 5 bis 13, wobei die Parameter den Kind-Knoten der ausgewählten Knoten rekursiv zugewiesen werden.

15. Verfahren zum Erzeugen oder Ändern einer Prozedur-Map nach einem der Ansprüche 5 bis 14, wobei die Map zeitabhängig ist.

**Claims**

1. A working interface having a tool for the generation or modification of procedural maps (10), allowing the generation or the modification of procedural maps (50) having a tree structure (40), comprising a plurality of levels (43), each one with at least one node (41) with which at least one parameter is associated, having:

   - a means for at least temporary connection to at least one external source of parameters;
   - a node selection tool (20), allowing the selection of at least one node (41; 51) of one level (43; 52) of a procedural map;
   - a tool for selecting and modifying parameters (30) of procedural maps for, on the one hand, selecting a parameter (31, 32, 33, 34, 35, 36) to be modified and, on the other hand, allowing the input of the new parameter value, according to two modes of entering parameters:
   - an internal mode, implementing an internal tool integrated into the interface and allowing the user to give a value to the different parameters;
- an external mode, implementing an external parameter selector (39), allowing the user to select a parameter of his choice from the external source, in order to receive a value of this parameter from said external source, said external source being a digital image;
- a processing unit intended to generate said processing map depending on the value of said external parameter so that the map has a tree structure;
- operating instructions, to ensure the operation of the tool and, in particular, of the processing unit;
- an output, making it possible to transmit the maps produced.

2. The working interface having a tool for the generation or modification of procedural maps according to Claim 1, in which the parameter of the digital image of the external source to be considered is the level of one or more colors, or a gradient, such as the value of the gradient in a given point according to a given vector, or a value of brightness, or the value of the Laplacian in a given point, or the distance or the variation compared to a given color.

3. The working interface having a tool for the generation or modification of procedural maps according to any one of Claims 1 or 2, in which the node selection tool comprises a unit for depth selection (26), making it possible to select the extent of the modification to be made on the tree.

4. The working interface having a tool for the generation or modification of procedural maps according to any one of Claims 1 to 3, in which the node selection tool comprises a node-object (51) or node (41) localization mobile framework (23).

5. A process implemented by a computer for generating or modifying a procedural map (50) with the aid of a working interface according to any one of Claims 1 to 4, said procedural map having a tree structure (40) comprising a plurality of levels (43), each one with at least one node (41) with which at least one parameter is associated, comprising the steps consisting of:

- establishing an at least temporary connection to an external source capable of supplying at least one value of at least one parameter potentially applicable to a procedural map;
- parameterizing a procedural map thanks to the sub-steps consisting of:

i) supplying a working interface according to any one of Claims 1 to 4;
ii) receiving the selection of at least one node, of at least one level for which the parameters are intended;
iii)

- for the parameters entered according to the internal mode, allowing the user to give one or more values thereto;
- for the parameters entered according to the external mode, allowing the user to select, with the aid of an external parameter selector, the external parameter of his choice from an external source and receiving the corresponding value from said external source, said external source being a digital image;
- applying the new values of the parameters to the selected portion of the map;
- generating the corresponding map.

6. The process for generating or modifying a procedural map according to Claim 5, in which the parameter of the digital image of the external source to be considered is the level of one or more colors, or a gradient, such as the value of the gradient in a given point according to a given vector, or a value of brightness, or the value of the Laplacian in a given point, or the distance or the variation compared to a given color.

7. The process for generating or modifying a procedural map according to Claim 6, also having the steps consisting of:

- receiving a selection of at least one parameter of said node to be modified;
- applying said value of the external parameter to this at least one node;
- processing said parameters, including the modified parameter, in order to generate said modified map.

8. The process for generating or modifying a procedural map according to any one of Claims 5 to 7, in which said map thus produced is a procedural map which can be modified locally.

9. The process for generating or modifying a procedural map according to any one of Claims 5 to 8, in which the procedural map having a tree structure can be represented by an equation of the type:

$$\sum_{(j,\, k)\, \varepsilon T} F\left(2^j\, x - k\right)$$

in which:

- F is a function (or morphlet) $R^n \to R$
- x is a vector of the type $(x_1, x_2, ...., x_n)$;
- T is a tree having nodes (j, k) and in which

- j represents the selected level, among a total number of potential levels jmax (j $\varepsilon$ (0, 1, 2, ...., jmax)
- k is a displacement vector for each node N of the type $(x_1, x_2, ...., x_n)$

10. The process for generating or modifying a procedural map according to Claim 9, in which the modifiable parameters are selected from the list having: a morphlet F, the maximum number of levels (jmax).

11. The process for generating or modifying a procedural map according to any one of Claims 5 to 9, in which the map is likely to be represented by an equation of the type:

$$\sum_{(j, k)\varepsilon T_{D,P}} 2^{-jH} F (2^j x - k) \xi_{(j, k)}$$

in which:

- F is a function (or morphlet) Rn $\to$ R
- x is a vector of the type $(x_1, x_2, ..., x_n)$;
- $T_{D,p}$ represents a tree provided with an intermittency parameter (p), comprising nodes (j, k), and a displacement value (D), in which
- j indicates the selected level, among a total number of potential levels jmax (j $\varepsilon$ (0, 1, 2, .... jmax)
- k is a displacement vector for each node N of the type $(x_1, x_2, ..., x_n)$
- H represents a roughness value;
- $\xi$ represents a random number.

12. The process for generating or modifying a procedural map according to Claim 11, in which the modifiable parameters are selected from the list having: a morphlet F, the maximum number of levels (jmax), the Hurst parameter (H), a random number ($\xi$), an intermittency parameter (p), a displacement value (D).

13. The process for generating or modifying a procedural map according to any one of Claims 9 to 12, in which the sum is a generalized sum.

14. The process for generating or modifying a procedural map according to any one of Claims 5 to 13, in which the parameters are assigned in a recursive way to the children nodes of the selected nodes.

15. The process for generating or modifying a procedural map according to any one of Claims 5 to 14, in which the map is time-dependent.

EP 1 741 066 B1

jmax 0 ........... log2(res)

*25*

*10*

*30*   *38*   *37*   *21*   i

out   in

Global   Local

F   Si (x*x+y*y)<1 alors 1 sinon 0   *34*

*39*

RefCouleur ▼   H   0   ........... 1   *35*

Xi   Gaussienne entre -1 et 1   *36*

*38*

Gradient ▼   D   x   ........... %   *31*

*39*   y   ........... %   *32*

p   0   ........... 1   *33*

*20*   *50*

*23*

k ...........   *24*

*26*

Sélecteur de profondeur   Noeud courant

Enfants   ........... %

*70*

Temps ...........

Fig 1

Fig 2

Image    Son

Temps    Autres

image    Source

Processus    carte procédurale    Paramètres

Image    Outils manuels

Fig 3

Fig 4

Fig 5

Fig 6

Fig. 7

Fig 8

Fig 9

Fig 10

Fig 11

Fig 12

Fig 13

Fig 14

Fig 15

Fig 16

52

Fig 17

Fig 18

50

Fig 19

30

Fig 20

50

Fig 21

Fig 22

Fig 23

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- A flexible noise model for designing maps. *international workshop on vision, modeling and visualization proceedings,* 21 Novembre 2001, 299-307